# EUROPEAN PATENT SPECIFICATION

(11) **EP 4 094 322 B1**
(45) Date of publication and mention of the grant of the patent: **07.10.2026**
(21) Application number: 20914775.0
(22) Date of filing: 17.07.2020
(51) Int. Cl.: H01M 4/24, H01M 6/04, H01M 12/06

(54) **ZINC BATTERY ELECTROLYTE ADDITIVE**
ZINKBATTERIEELEKTROLYTZUSATZ
ADDITIF D'ÉLECTROLYTE DE BATTERIE AU ZINC

(30) Priority: 24.01.2020 US 202016752170
(43) Date of publication of application: 30.11.2022
(73) Proprietor: Bolton, Onas, Pepper Pike, OH 44124 (US)
(72) Inventor: Bolton, Onas, Pepper Pike, OH 44124 (US)
(74) Representative: Calysta NV
(86) International application number: PCT/US2020/042557
(87) International publication number: WO 2021/150267

(56) References cited:
- EP-A1- 0 109 223
- JP-A- H06 293 991
- US-A- 6 083 647
- US-A1- 2018 316 064
- US-B1- 6 558 838
- LIU ET AL.: "Experimental and Modeling Studies of the Hysteresis Behavior and Dendrite Suppression Efficacy of an Electrolyte Additive in Zinc Electrodeposition", JOURNAL OF THE ELECTROCHEMICAL SOCIETY, vol. 166, no. 13, 16 August 2019 (2019-08-16), pages D583 - D588, XP055843429
- ANONYMOUS: "Zinc-air battery", WIKIPEDIA, THE FREE ENCYCLOPEDIA, 31 January 2019 (2019-01-31), XP055843432, Retrieved from the Internet <URL:https://en.wikipedia.org/w/index.php?title=Zinc%E2%80%93air_battery&oidid=881000599>

## Description

This invention was made with government support under contract number NSF 1746210 awarded by the National Science Foundation. The government has certain rights in the invention.

### I. BACKGROUND OF THE INVENTION

### A. FIELD OF INVENTION

The invention generally relates to chemical additives for zinc battery electrolytes.

### B. DESCRIPTION OF THE RELATED ART

Despite their attractive cost and safety, batteries that utilize zinc as their anode material suffer from several problems intrinsic to this metal. Among these are 1) the formation of dendrites during recharging and 2) parasitic side reactions such as the evolution of hydrogen gas from the electrolyte reacting at the zinc surface. These problems have contributed to both limit the penetration of zinc batteries into certain markets and to prevent the emergence of otherwise promising zinc battery chemistries such as Zinc-Air. Dendrite formation reduces battery efficiency and can lead to cell failure. Hydrogen evolution can cause reduced shelf life due to self-discharge as well as mechanical damage due to pressure buildup.

It is known to use additives to suppress dendrite formation and hydrogen evolution; however, few known additives are effective at suppressing dendrite formation and hydrogen evolution. For instance, EP0109223A1 describes quaternary ammonium salts (morpholinium/pyrrolidinium) used as bromine complexing agents and dendrite formation inhibitors. However, this document does not address hydrogen evolution. Moreover, known additives exhibit certain negative properties such as loss of cell efficiency. Some embodiments of the present invention may provide one or more benefits or advantages over the prior art.

### II. SUMMARY OF THE INVENTION

The invention relates to a zinc battery cell, comprising a cathode in electric communication with a zinc anode through an electrolyte; wherein the cathode is carbon or air, and an effective amount of an electrolyte additive, comprising:
wherein, N/P is a central nitrogen or central phosphorous atom having a +1 charge;
wherein R1 is selected from the group consisting of 4-methylene-toluene, 3-methylene-toluene, 2-methylene-toluene, 4-methylene-chlorobenzene, 3-methylene-chlorobenzene, 2-methylene-chlorobenzene, 4-methylene-bromobenzene, 3-methylene-bromobenzene, 2-methylene-bromobenzene, 4-methylene-iodobenzene, 3-methylene-iodobenzene, 2-methylene-iodobenzene, 4-methylene-cyanobenzene, 3-methylene-cyanobenzene, 2-methylene-cyanobenzene, 4-methylene-anisole, 3-methylene-anisole, 2-methylene-anisole, 1-methylnaphthalene, 1-methylene-2,6-dimethylbenzene, 1-methylene-2,4-dimethylebenzene, 1-methylene-3,4-dimethylbenzene, 1-methylene-2,5-dimethylbenzene, 1-methylene-3,5-dimethylbenzene, 1-methylene-2,4,6-trimethylbenzene, 1-methylene-3,4,5-trimethoxybenzene, 1-methylene-2,6-dichlorobenzene, 4-methylene-nitrobenzene, 4-methylene-benzoic acid, 3-methylene-benzoic acid, 2-methylene-benzoic acid, 2-methylene-phenol, 3-methylene-phenol, and 4-methylene-phenol;
wherein R2, R3, and R4 are independently selected from R1, or a linear or non-linear alkyl group from C1 to C25
   wherein [An]- is a counter anion.

Embodiments of the invention relate to zinc battery cells comprising a zinc anode, a cathode selected from carbon or air, an electrolyte, and an effective amount of an electrolyte additive as defined in the present invention Electrolyte additive compositions not forming part of a zinc battery cell according to the invention are described for background.

As used herein the terms "embodiment", "embodiments", "some embodiments", "other embodiments" and so on are not exclusive of one another. Except where there is an explicit statement to the contrary, all descriptions of the features and elements of the various embodiments disclosed herein may be combined in all operable combinations thereof.

Language used herein to describe process steps may include words such as "then" which suggest an order of operations; however, one skilled in the art will appreciate that the use of such terms is often a matter of convenience and does not necessarily limit the process being described to a particular order of steps.

Conjunctions and combinations of conjunctions (e.g. "and/or") are used herein when reciting elements and characteristics of embodiments; however, unless specifically stated to the contrary or required by context, "and", "or" and "and/or" are interchangeable and do not necessarily require every element of a list or only one element of a list to the exclusion of others.

Terms of degree, terms of approximation, and/or subjective terms may be used herein to describe certain features or elements of the invention. In each case sufficient disclosure is provided to inform the person having ordinary skill in the art in accordance with the written description requirement and the definiteness requirement of 35 U.S.C. 112.

The term "effective amount" is used herein to indicate an amount of an electrolyte additive dissolved in a liquid electrolyte that reduces dendrite formation and hydrogen evolution by a measurable and/or visually perceptible amount under the stated test conditions, or where no conditions are stated in 4M potassium hydroxide, 0.1M zinc oxide, and water at -1.6V relative to a Hg/HgO reference electrode for 1500 seconds. However, this is not intended to limit the invention to the stated test conditions. The person having ordinary skill in the art would readily understand that a wide variety of electrolytes and concentrations of electrolytes, for instance, may be appropriate or desirable for a given application. It is well within the skill in the art to select from known electrolytes.

### III. BRIEF DESCRIPTION OF THE DRAWINGS

The invention may take physical form in certain parts and arrangement of parts, embodiments of which will be described in detail in this specification and illustrated in the accompanying drawings which form a part hereof, wherein like reference numerals indicate like structure, and wherein:
FIG. 1 is a photograph of electrodeposited zinc in a comparative control cell containing no additive after operating the cell for 1500s;
FIG. 2 is a photograph of electrodeposited zinc in a comparative cell containing 1.0 wt% Benzyltrimethylammonium Hydroxide after operating the cell for 1500s;
FIG. 3 is a photograph of electrodeposited zinc in a comparative cell containing 1.0 wt% Benzyltributylammonium Chloride after operating the cell for 1500s;
FIG. 4 is a photograph of electrodeposited zinc in a comparative cell containing 1.0 wt% Dibenzyldimethylammonium Chloride after operating the cell for 1500s;
FIG. 5 is a photograph of electrodeposited zinc in a comparative cell containing 0.01 wt% Dibenzyldimethylammonium Chloride after operating the cell for 1500s;
FIG. 6 is a photograph of electrodeposited zinc in a comparative cell containing 0.1 wt% Dibenzyldimethylammonium Chloride after operating the cell for 1500s;
FIG. 7 is ¹H NMR data for 1-(Trimethylammonium methyl)naphthalene chloride in D₂O with an inlay photograph of electrodeposited zinc in a cell according to the invention, containing 1.0 wt% 1-(Trimethylammonium methyl)naphthalene chloride after operating the cell for 1500s;
FIG. 8 is ¹H NMR data for 4-(Trimethylammonium methyl)benzonitrile Chloride in D₂O with an inlay photograph of electrodeposited zinc in a cell according to the invention, containing 1.0 wt% 4-(Trimethylammonium methyl)benzonitrile Chloride after operating the cell for 1500s;
FIG. 9 is a photograph of electrodeposited zinc in a cell according to the invention, containing 1.0 wt% 4-(Trimethylammonium methyl)anisole Chloride after operating the cell for 1500s;
FIG. 10 is a photograph of electrodeposited zinc in a cell according to the invention, containing 0.5 wt% 4-(Trimethylammonium methyl)anisole Chloride after operating the cell for 1500s;
FIG. 11 is a photograph of electrodeposited zinc in a cell according to the invention, containing 0.1 wt% 4-(Trimethylammonium methyl)anisole Chloride after operating the cell for 1500s;
FIG. 12 is a photograph of electrodeposited zinc in a cell according to the invention, containing 1.0 wt% 4-(Trimethylammonium methyl)-1,2,6-trimethoxybenzene after operating the cell for 1500s;
FIG. 13 is a photograph of electrodeposited zinc in a cell according to the invention, containing 1.0 wt% (4-Methylbenzyl)trimethylammonium Chloride after operating the cell for 1500s;
FIG. 14 is ¹H NMR data for (2-Methylbenzyl)trimethylammonium Chloride in D₂O with an inlay photograph of electrodeposited zinc in a cell according to the invention containing 1.0 wt% (2-Methylbenzyl)trimethylammonium Chloride after operating the cell for 1500s;
FIG. 15 is a photograph of electrodeposited zinc in a cell according to the invention, containing 1.0 wt% (4-Chlorobenzyl)trimethylammonium Chloride after operating the cell for 1500s;
FIG. 16 is ¹H NMR data for (2-Chlorobenzyl)trimethylammonium Chloride in D₂O with an inlay photograph of electrodeposited zinc in a cell according to the invention, containing 1.0 wt% (2-Chlorobenzyl)trimethylammonium Chloride after operating the cell for 1500s;
FIG. 17 is ¹H NMR data for (4-Bromobenzyl)trimethylammonium Bromide in D₂O with an inlay photograph of electrodeposited zinc in a cell according to the invention, containing 1.0 wt% (4-Bromobenzyl)trimethylammonium Bromide after operating the cell for 1500s;
FIG. 18 is ¹H NMR data for Benzyltrimethylphosphonium Chloride in D₂O with an inlay photograph of electrodeposited zinc in a comparative cell containing 1.0 wt% Benzyltrimethylphosphonium Chloride after operating the cell for 1500s;
FIG. 19 is a photograph of electrodeposited zinc in a cell according to the invention, containing 1.0 wt% (2-Hydroxybenzyl)trimethylammonium Iodide after operating the cell for 1500s;
FIG. 20 is ¹H NMR data for (3-Methylbenzyl)trimethylammonium Chloride in D₂O with an inlay photograph of electrodeposited zinc in a cell according to the invention, containing 1.0 wt% (3-Methylbenzyl)trimethylammonium Chloride after operating the cell for 1500s;
FIG. 21 is ¹H NMR data for 4-(Trimethylammonium)benzoic acid Bromide in D₂O with an inlay photograph of electrodeposited zinc in a cell according to the invention, containing 1.0 wt% 4-(Trimethylammonium methyl)benzoic acid Bromide after operating the cell for 1500s;
FIG. 22 is a photograph of electrodeposited zinc in a cell according to the invention, containing 1.0 wt% 3-(Trimethylammonium methyl)anisole Chloride after operating the cell for 1500s;
FIG. 23 is a photograph of electrodeposited zinc in a comparative cell containing 1.0 wt% Benzalkonium Chloride after operating the cell for 1500s;
FIG. 24 is ¹H NMR data for (2,6-Dimethylbenzyl)trimethylammonium Chloride in D₂O with an inlay photograph of electrodeposited zinc in a cell according to the invention, containing 1.0 wt% (2,6-Dimethylbenzyl)trimethylammonium;
FIG. 25 is a photograph of electrodeposited zinc in a comparative cell containing 25 wt% Benzyltrimethylammonium chloride after operating the cell for 1500s;

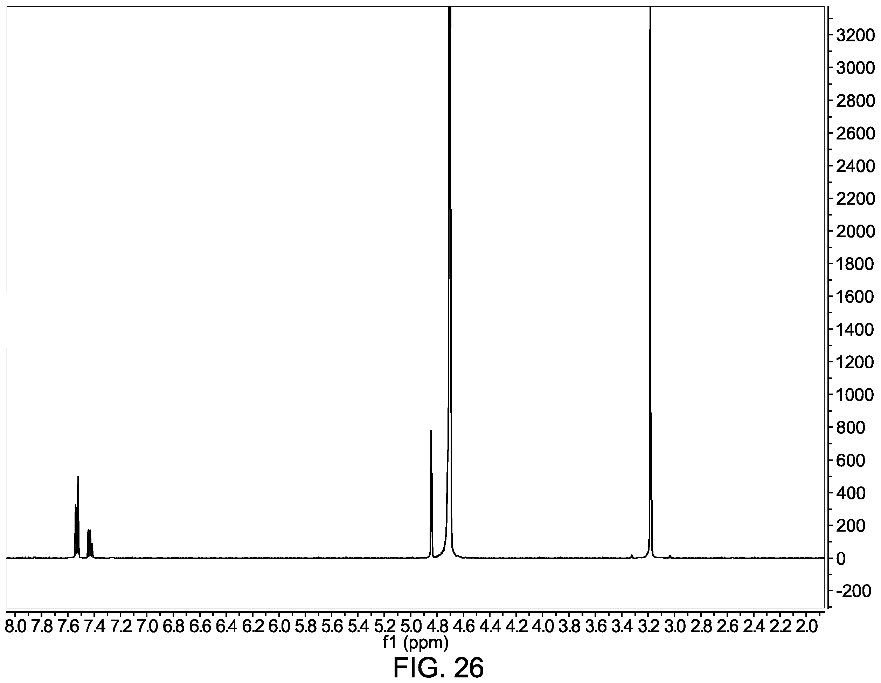

FIG. 26 is ¹H NMR data for (2,6-Dichlorobenzyl)trimethylammonium chloride in D₂O;
FIG. 27 is ¹H NMR data for (3,4-Dimethylbenzyl)trimethylammonium chloride in D₂O with an inlay photograph of electrodeposited zinc in a cell containing 1.0 wt% (3,4-Dimethylbenzyl)trimethylammonium chloride after operating the cell for 1500s;

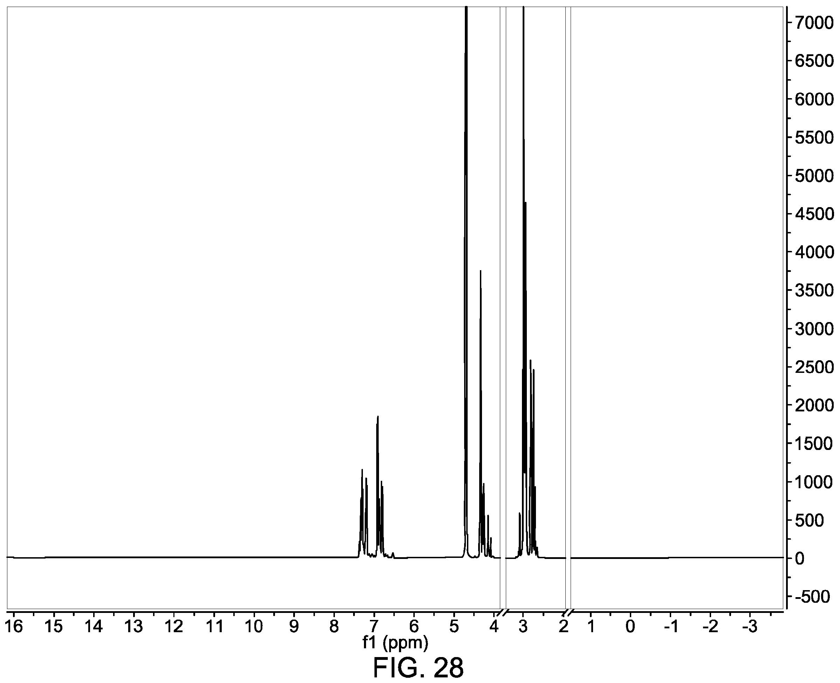

FIG. 28 is ¹H NMR data for (4-Hydroxybenzyl)trimethylammonium Iodide in D₂O;

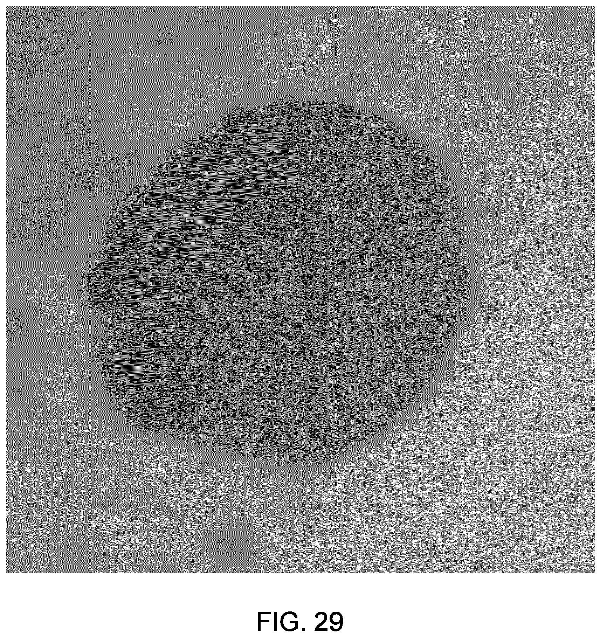

FIG. 29 is a photograph of electrodeposited zinc in a cell according to the invention, containing 15 wt% 4-(Trimethylammoniummethyl)anisole chloride after operating the cell for 1500s;
FIG. 30 is a photograph of electrodeposited zinc in a cell according to the invention, containing 15 wt% (4-Methylbenzyl)trimethylammonium chloride after operating the cell for 1500s;
FIG. 31 is a photograph of electrodeposited zinc in a cell according to the invention, containing 0.1 wt% (4-Methylbenzyl)trimethylammonium chloride after operating the cell for 1500s; and
FIG. 32 is a schematic view of a zinc-based battery cell according to one or more embodiments of the invention.

### IV. DETAILED DESCRIPTION OF THE INVENTION

Embodiments of the invention include organic electrolyte additives for use in zinc battery cells comprising a zinc anode, a cathode selected from carbon or air, and an electrolyte. The electrolyte additives may improve zinc battery performance by both selectively preventing dendrite formation and preventing hydrogen evolution side reactions without hindering cell efficiency.

The invention relates to a zinc battery cell, comprising a cathode in electric communication with a zinc anode through an electrolyte; wherein the cathode is carbon or air and an effective amount of an electrolyte additive according to formula I below.

Formula I illustrates an electrolyte additive for use in a zinc battery cell according to the invention. The electrolyte additive comprises a central nitrogen or phosphorous atom with a charge of +1, denoted herein as "N/P⁺" or as an "N/P⁺ center". The N/P⁺ center is bonded to four R groups R¹, R², R³, and R⁴. The structure shown in Formula I is not intended to illustrate isomers or stereochemical structures, but rather is intended to encompass all isomeric forms with the same atom-to-atom connectivity, provided that the substituents R1, R2, R3 and R4 are selected as defined in the invention.

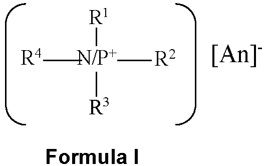

R¹ is selected from the following radicals, where "yl" or "methylene" refers to the position of the radical electron available for bonding with an N/P+ center: 4-methylene-toluene, 3-methylene-toluene, 2-methylene-toluene, 4-methylene-chlorobenzene, 3-methylene-chlorobenzene, 2-methylene-chlorobenzene, 4-methylene-bromobenzene, 3-methylene-bromobenzene, 2-methylene-bromobenzene, 4-methylene-iodobenzene, 3-methylene-iodobenzene, 2-methylene-iodobenzene, 4-methylene-cyanobenzene, 3-methylene-cyanobenzene, 2-methylene-cyanobenzene, 4-methylene-anisole, 3-methylene-anisole, 2-methylene-anisole, 1-methylnaphthalene, 1-methylene-2,6-dimethylbenzene, 1-methylene-2,4-dimethylebenzene, 1-methylene-3,4-dimethylbenzene, 1-methylene-2,5-dimethylbenzene, 1-methylene-3,5-dimethylbenzene, 1-methylene-2,4,6-trimethylbenzene,1-methylene-3,4,5-trimethoxybenzene, 1-methylene-2,6-dichlorobenzene, 4-methylene-nitrobenzene, 4-methylene-benzoic acid, 3-methylene-benzoic acid, 2-methylene-benzoic acid, 2-methylene-phenol, 3-methylene-phenol, and 4-methylene-phenol.

With continuing reference to Formula I, the radicals R², R³, and R⁴ may be independently selected from R¹ as defined above or selected from linear and non-linear alkyls from C1 to C25 including methyl, ethyl, n-propyl, n-butyl, n-pentyl, n-hexyl, n-octyl, n-decyl, n-dodecyl, n-tetradecyl, n-hexadecyl, or n-octadecyl..

Embodiments conforming to Formula I may include a sufficient amount of counter anion [An] to produce a neutral species. The anion [An] may be, for example and without limitation, chloride, bromide, iodide, fluoride, hydroxide, nitrate, nitrite, sulphate, sulphite, phosphate, perchlorate, or any combination thereof. The person having ordinary skill in the art will readily appreciate that the anion has less or no influence on performance of the electrolyte additives of the present invention. Accordingly, a wide variety of anions are within the scope of the invention, and the foregoing list is meant only to be illustrative.

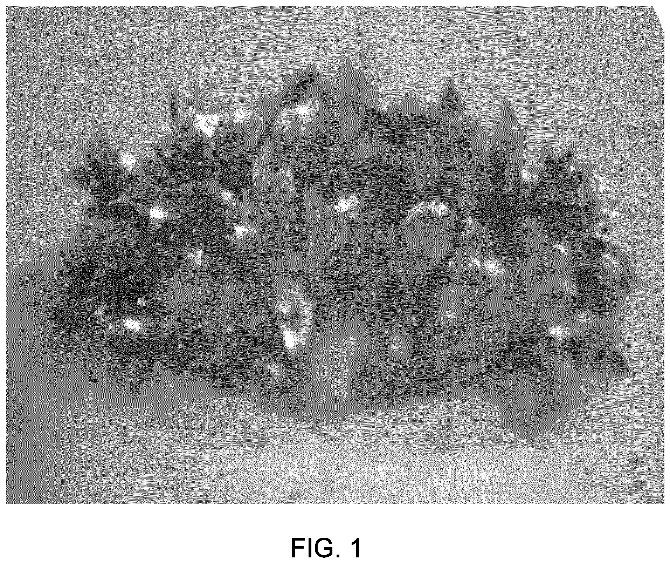

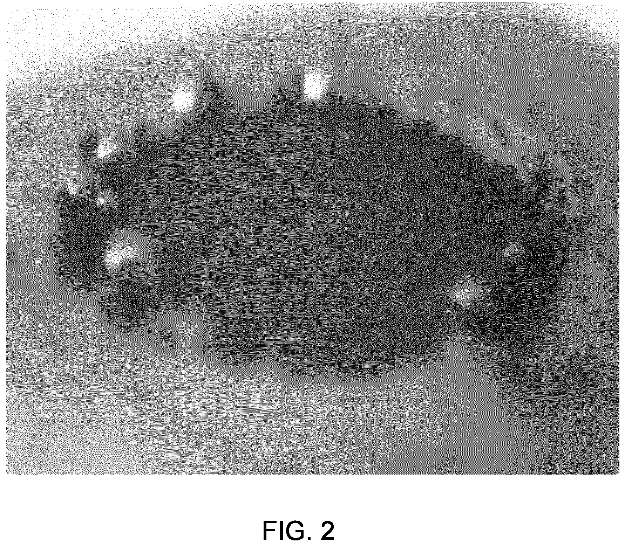

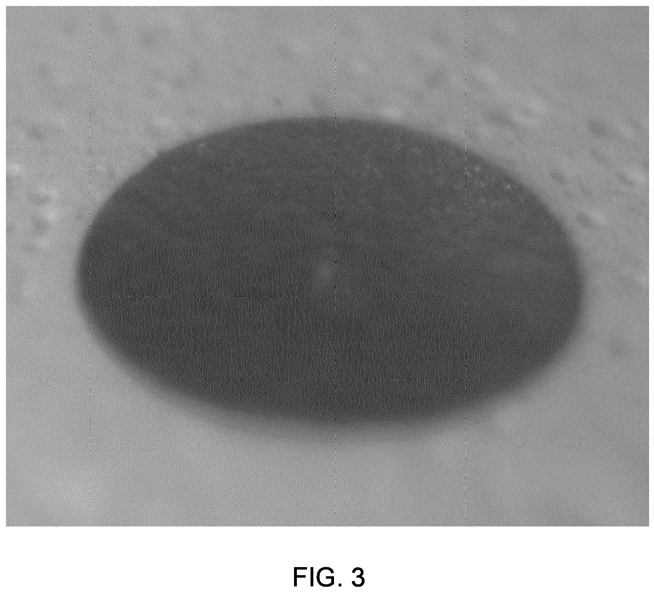

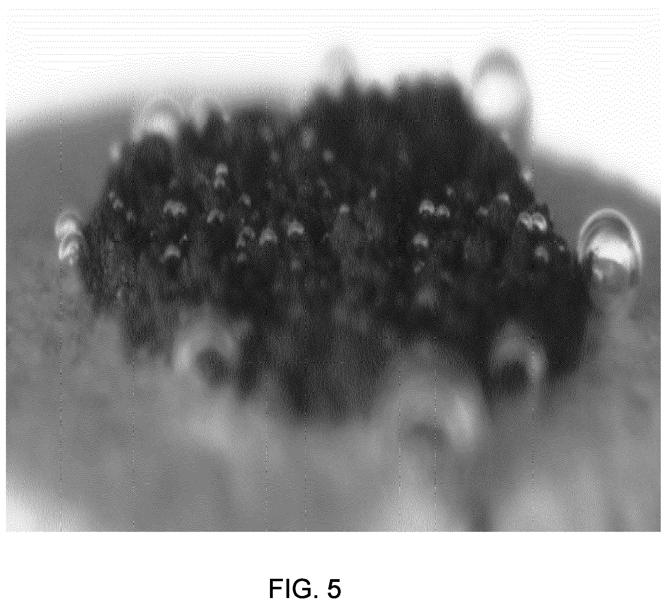

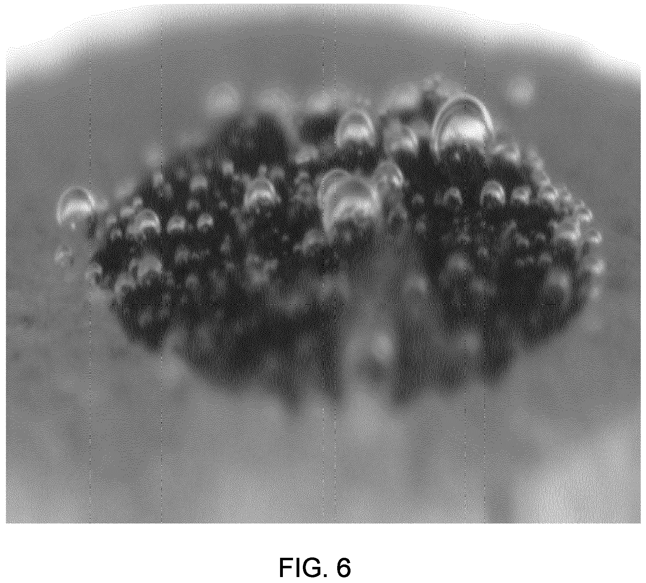

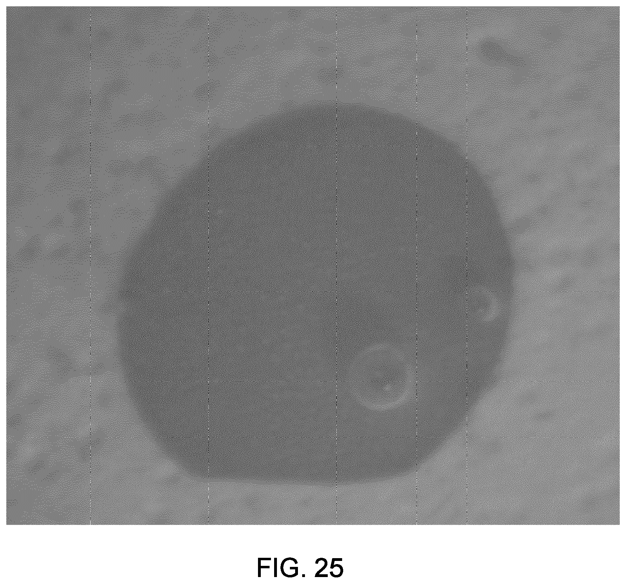

Referring now to the drawings wherein the showings are for purposes of illustrating embodiments of the invention only and not for purposes of limiting the same, FIG. 1 is a photograph showing dendrite growth using 4M KOH, 0.1M ZnO, and water with no additives suppressing dendrite growth (comparative example). Plating was conducted at -1.6V relative to a Hg/HgO reference electrode for 1500 seconds. FIG. 1 shows dendrite growth after 1500 seconds. This serves as a control against which dendrite suppression additives are compared in subsequent tests. Each experimental run is conducted under the same conditions as the control run, namely, in 4M KOH electrolyte, 0.1M ZnO, and water at -1.6V relative to a Hg/HgO reference electrode for 1500 seconds. The results are summarized in Table I wherein results linked to figures 1 to 6, 18, 23 and 25 are comparative examples.

With respect to the control results shown in FIG. 1, prominent dendrite growth is clearly visible. Although the control rapidly evolves hydrogen, the bubbles form so quickly over the entire surface that they do not adhere to the dendrites. Accordingly, very few if any hydrogen bubbles are visible in FIG. 1. he subsequent figures show experimental results obtained with different additives, some according to the invention and some comparative. The degree of hydrogen evolution suppression and dendrite suppression varies depending on the additive and concentration tested.. Where hydrogen suppression is complete, no bubbles form on the plated zinc surface so the associated figure shows no hydrogen bubbles. However, where hydrogen evolution is partially suppressed large slow-forming hydrogen bubbles are visible in the associated figure adhering to the plated zinc.

Unless expressly indicated as comparative, the examples described below relate to zinc battery cells according to the present invention, wherein the cathode is carbon or air.

**Table I. Suppression of Dendrite Formation by additives of the invention and comparative additives**

| Additive | Amount (wt%) | Hydrogen Suppressed | Dendrite Suppressed | Figure |
|---|---|---|---|---|
| No additive (control) - comparative control | 0 | No | No | Fig. 1 |
| Benzyltrimethylammonium Hydroxide (BTMAH) 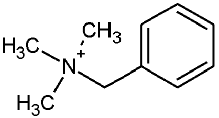 OH⁻(comparative example) | 1.0 | Partial | Yes | Fig. 2 |
| Benzyltributylammonium Chloride (BTBAC) 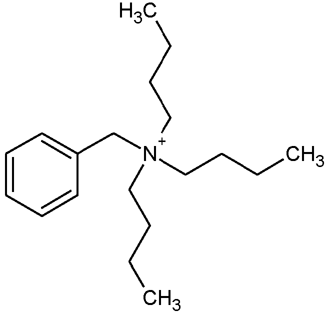 Cl⁻ (comparative example) | 1.0 | Partial | Yes | Fig. 3 |
| Dibenzyldimethylammonium Chloride (DBDMAC) 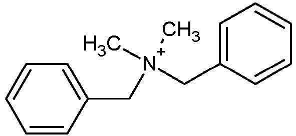 Cl⁻ (comparative example) | 1.0 | Partial | Yes | Fig. 4 |
| Dibenzyldimethylammonium Chloride (DBDMAC) (comparative example) | 0.01 | No | Partial | Fig. 5 |
| Dibenzyldimethylammonium Chloride (DBDMAC) (comparative example) | 0.1 | Partial | Yes | Fig. 6 |
| 1-(Trimethylammonium methyl)naphthalene Chloride (TMAMNC) 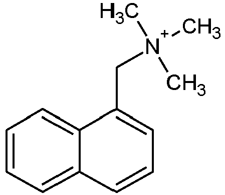 Cl⁻ | 1.0 | No | Partial | Fig. 7 |
| 4-(Trimethylammoniummethyl)benzonitrile Chloride (TMAMBC) 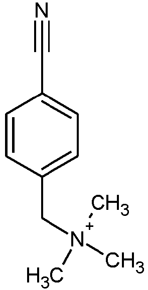 Cl⁻ | 1.0 | Yes | Partial | Fig. 8 |
| 4-(Trimethylammoniummethyl)anisole Chloride 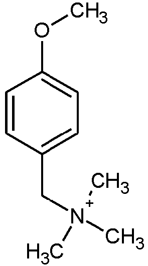 Cl⁻ | 1.0 | Yes | Yes | Fig. 9 |
| 4-(Trimethylammoniummethyl)anisole Chloride | 0.5 | Partial | Yes | Fig. 10 |
| 4-(Trimethylammoniummethyl)anisole Chloride | 0.1 | Partial | Partial | Fig. 11 |
| 4-(Trimethylammoniummethyl)-1,2,6-trimethoxybenzene 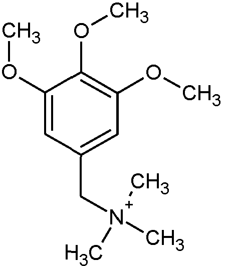 Cl⁻ | 1.0 | Partial | Yes | Fig. 12 |
| (4-Methylbenzyl)trimethylammonium Chloride 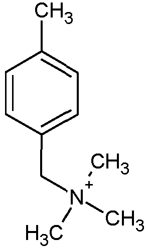 Cl⁻ | 1.0 | Partial | Yes | Fig. 13 |
| (4-Methylbenzyl)trimethylammonium chloride | 15 | Yes | Yes | Fig. 30 |
| (4-Methylbenzyl)trimethylammonium chloride | 0.1 | Partial | Partial | Fig. 31 |
| (2-Methylbenzyl)trimethylammonium Chloride 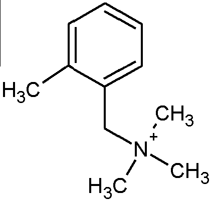 Cl⁻ | 1.0 | Partial | Yes | Fig. 14 |
| (4-Chlorobenzyl)trimethylammonium Chloride 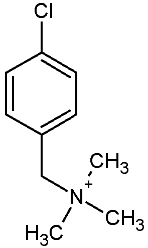 Cl⁻ | 1.0 | Partial | Partial | Fig. 15 |
| (2-Chlorobenzyl)trimethylammonium Chloride 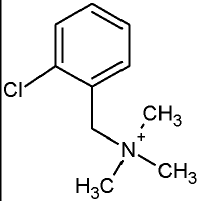 Cl⁻ | 1.0 | No | Partial | Fig. 16 |
| (4-Bromobenzyl)trimethylammonium Bromide 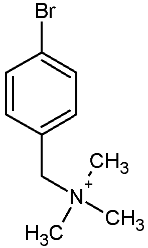 Br⁻ | 1.0 | Partial | Yes | Fig. 17 |
| Benzyltrimethylphosphonium Chloride 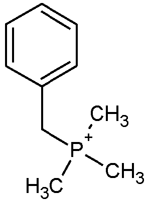 Cl⁻ (comparative example) | 1.0 | No | Partial | Fig. 18 |
| (2-Hydroxybenzyl)trimethylammonium Iodide 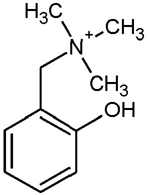 I⁻ | 1.0 | Partial | Partial | Fig. 19 |
| (3-Methylbenzyl)trimethylammonium Chloride 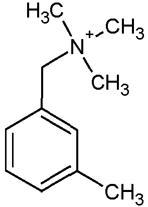 Cl⁻ | 1.0 | Partial | Yes | Fig. 20 |
| 4-(Trimethylammoniummethyl)benzoic acid Bromide 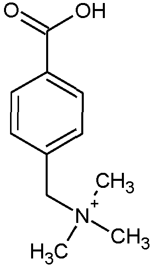 Br⁻ | 1.0 | Partial | Partial | Fig. 21 |
| 3-(Trimethylammoniummethyl)anisole Chloride 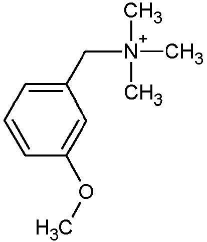 Cl⁻ | 1.0 | Partial | Partial | Fig. 22 |
| Benzalkonium Chloride 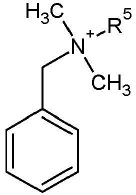 Cl⁻ R⁵=CₙH₂ₙ₊₁ where 8 ≥ n ≥ 18 (comparative example) | 1.0 | Partial | Yes | Fig. 23 |
| (2,6-Dimethylbenzyl)trimethylammonium Chloride 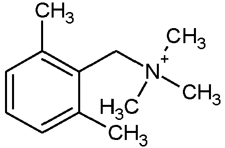 Cl⁻ | 1.0 | No | Partial | Fig. 24 |
| Benzyltrimethylammonium Hydroxide (BTMAH) 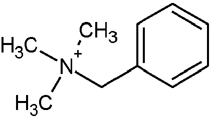 OH⁻ (comparative example) | 25 | Yes | Yes | Fig. 25 |
| (2,6-Dichlorobenzyl)trimethylammonium Chloride 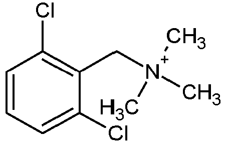 Cl⁻ | 1.0 | Partial | No | Fig. 26 |
| (3,4-Dimethylbenzyl)trimethylammonium Chloride 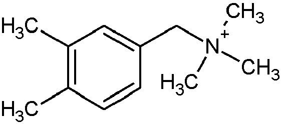 Cl⁻ | 1.0 | Yes | Yes | Fig. 27 |
| (4-Hydroxybenzyl)trimethylammonium Iodide 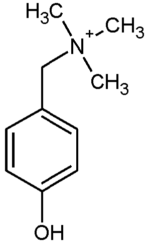 I⁻ | 1.0 | Partial | Partial | Fig. 28 |
| 4-(Trimethylammoniummethyl)anisole Chloride 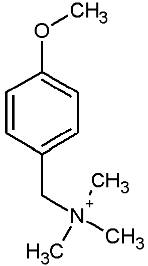 Cl⁻ | 15 | Yes | Yes | Fig. 29 |

### Comparative preparation and performance of dibenzyldimethylammonium chloride (DBDMAC).

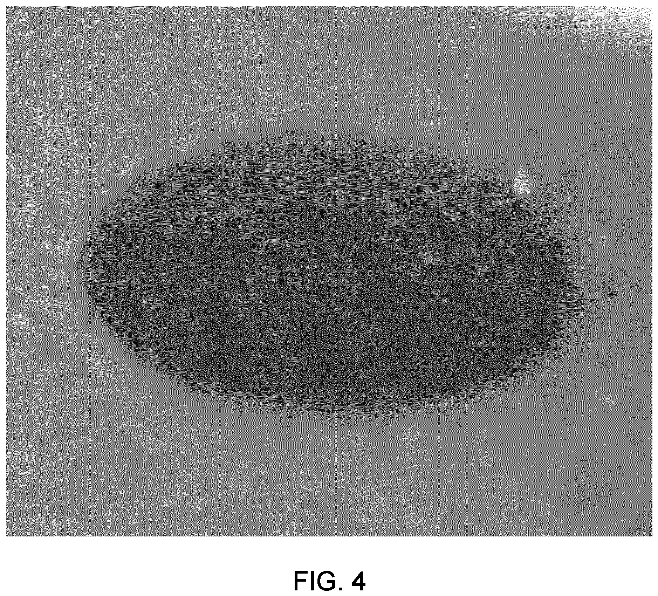

N,N-dimethylbenzylamine (2g, 14.8 mmol) is diluted into 10 mL of acetonitrile and stirred under air. Benzylchloride (2.06g, 1.87 mL, 16.3 mmol) is added at once and the reaction is heated to 78°C to reflux for 3 hours. The solution is concentrated under reduced pressure to a colorless viscous oil. The desired product is recrystallized from acetone. A white/colorless crystal solid of 3.50 g is collected (90.4 % yield) and its structure is confirmed by ¹H NMR. The dendrite suppressive effect of this additive is shown in FIGS. 4-6. Full dendrite suppression occurs at 1 wt% and 0.1 wt%, and partial suppression is observed at 0.01 wt%. Hydrogen evolution is partially suppressed at 1 wt% and 0.1 wt%. No hydrogen suppression is observed at 0.01 wt%.

### 1-(Trimethylammonium methyl)naphthalene chloride preparation and performance.

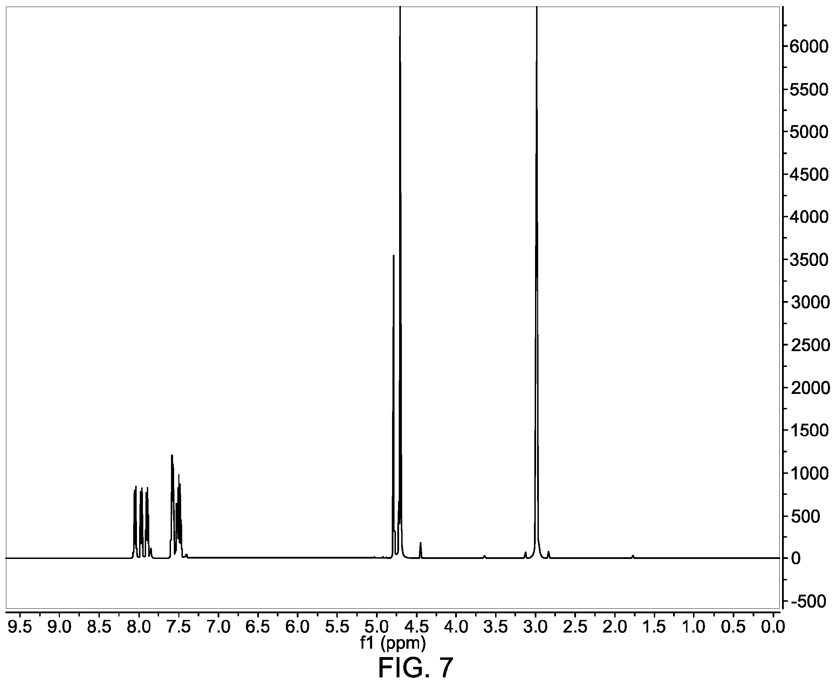

To a 100 mL flask is added 10 mL of a 13% solution of trimethylamine in tetrahydrofuran (1.16g, 19.7 mmol). The solution is stirred under air at room temperature. 1-(Chloromethyl)naphthalene (3.80 g, 3.22 mL, 21.5 mmol) is added in four quick portions and the reaction is heated to 60°C for 3 hours. The reaction is then cooled to room temperature and white precipitates are collected by suction filtration and washed with additional tetrahydrofuran. About 3.10 g of white fluffy powder is collected (67% yield), and the desired product structure is confirmed by ¹H NMR. The partial dendrite suppressive effect of this additive is shown in FIG. 7. 1-(Trimethylammonium methyl)naphthalene chloride promotes, rather than suppresses, hydrogen evolution.

### 4-(Trimethylammoniummethyl)benzonitrile chloride preparation and performance.

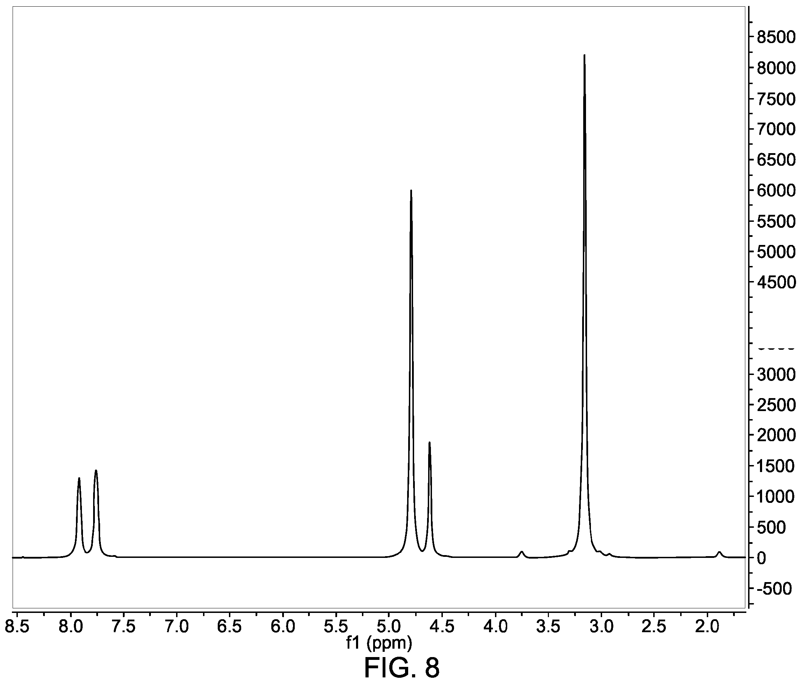

To a 100 mL flask is added 10 mL of a 13% solution of trimethylamine in tetrahydrofuran (1.16g, 19.7 mmol). The solution is stirred under air at room temperature. 4-(Chloromethyl)benzonitrile (2.70 g, 17.8 mmol) is added in quick portions and the reaction is heated to 60°C for 2 hours. The reaction is then cooled to room temperature and white precipitates are collected by suction filtration and washed with additional tetrahydrofuran. About 2.80 g of white fluffy powder is collected (75% yield), and the desired product structure is confirmed by ¹H NMR. The partial dendrite suppressive effect of this additive is shown in FIG. 8. This additive strongly suppresses hydrogen evolution.

### 4-(Trimethylammoniummethyl)anisole chloride preparation and performance.

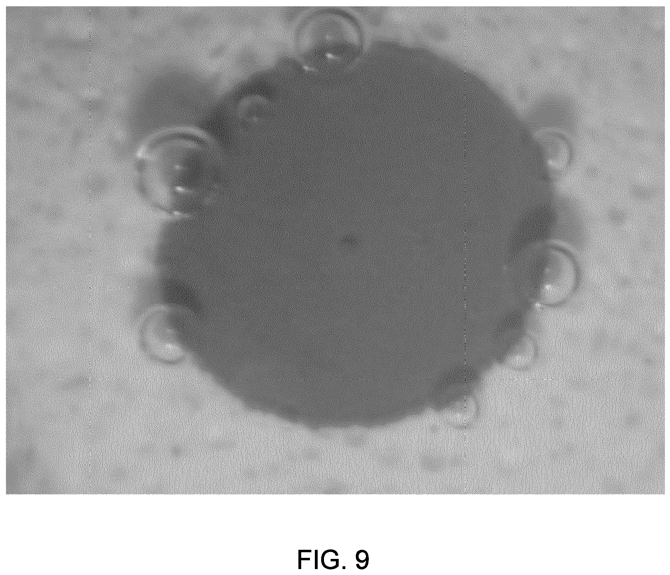

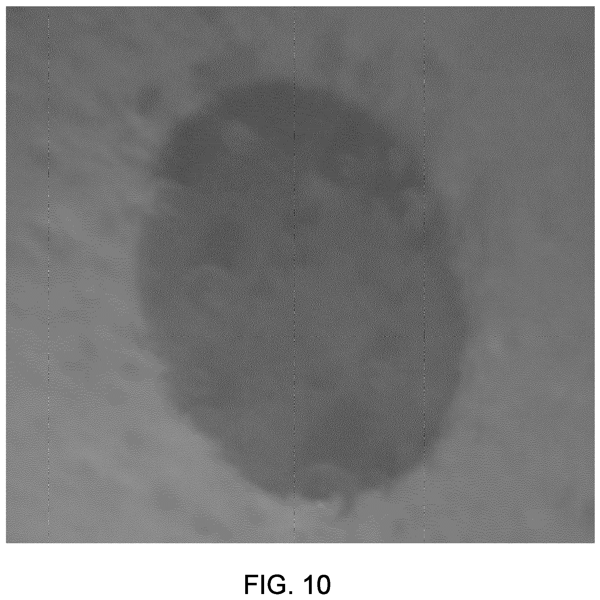

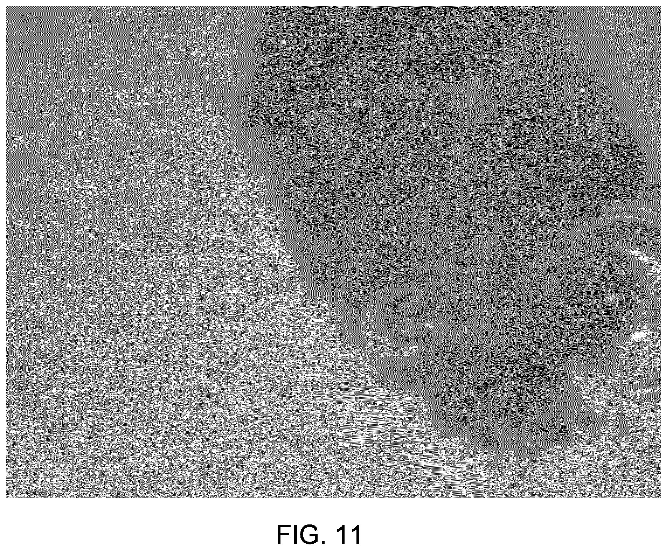

To a 100 mL flask is added 20 mL of a 13% solution of trimethylamine in tetrahydrofuran (2.32g, 39.4 mmol) and this is stirred under air at room temperature. (4-Methoxybenzyl)chloride (5.59 g, 4.84 mL, 35.7 mmol) is added in quick portions and the reaction is heated to 60°C for 3 hours. The reaction is then cooled to room temperature and white precipitates are collected by suction filtration and washed with additional tetrahydrofuran. About 7.08 g of white fluffy powder is collected (92% yield) and the desired product structure is confirmed by ¹H NMR. The dendrite suppressive effect of this additive is shown in FIGS. 9-11. Dendrite suppression is complete under the test conditions at 1 wt% and 0.5 wt%, and partial at 0.1 wt%. Hydrogen evolution is fully suppressed at 1.0 wt% and partially suppressed at 0.5 wt% and 0.01 wt%.

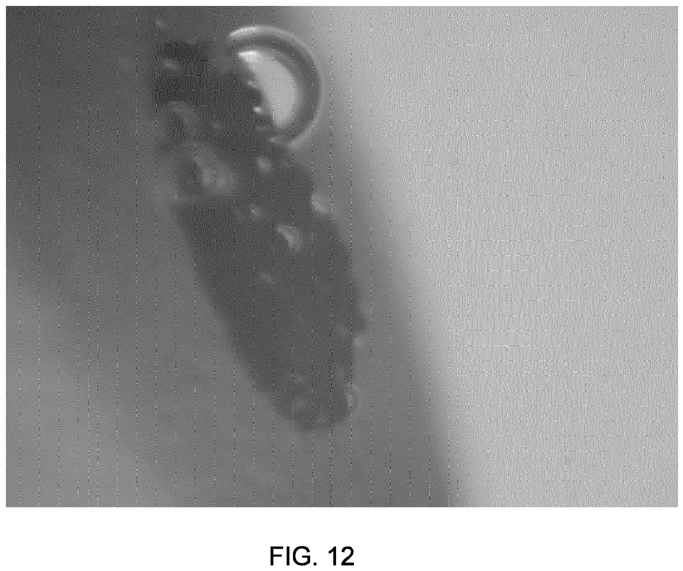

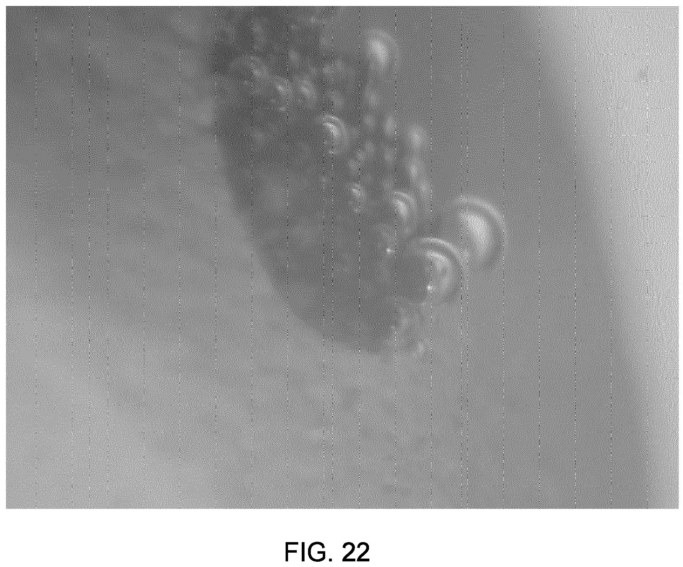

An analogous method is used to synthesize 3-(trimethylammoniummethyl)anisole chloride, as well as similar 4-(trimethylammoniummethyl)-1,2,6-trimethoxybenzene. FIG. 12 shows that 4-(trimethylammoniummethyl)-1,2,6-trimethoxybenzene fully suppresses dendrite formation under the test conditions at 1.0 wt%, and partially suppresses hydrogen evolution. FIG. 22 shows that 3-(trimethylammoniummethyl)anisole chloride fully suppresses hydrogen evolution and dendrite formation.

### (4-Methylbenzyl)trimethylammonium chloride preparation and performance.

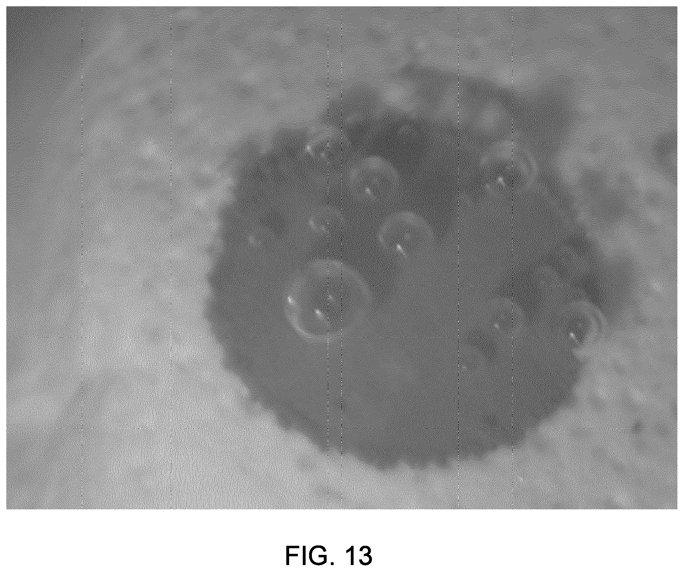

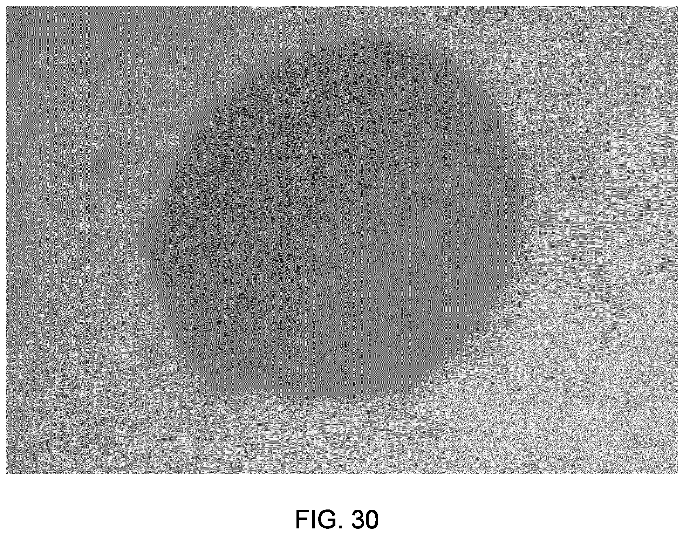

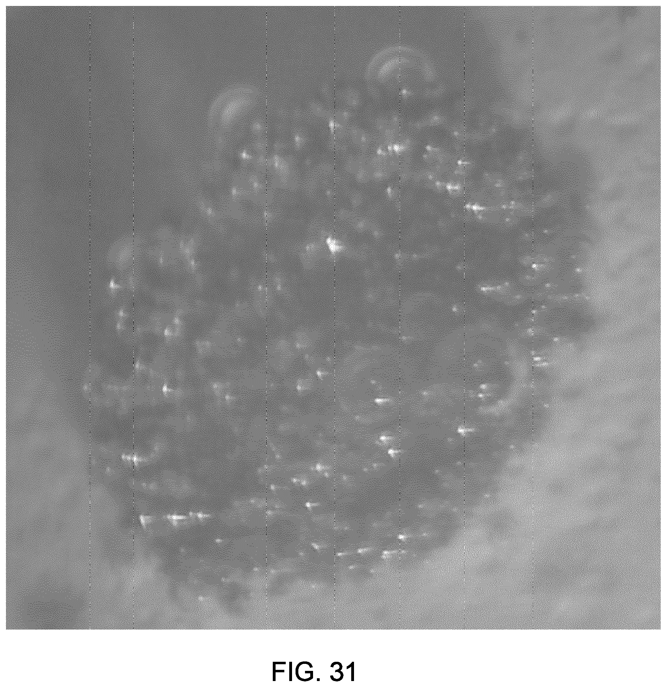

To a 100 mL flask is added 10 mL of a 13% solution of trimethylamine in tetrahydrofuran (1.16g, 19.7 mmol). The solution is stirred under air at room temperature. 4-Methylbenzyl chloride (2.75 g, 2.6 ml, 19.5 mmol) is added in quick portions and the reaction is heated to 60°C for 3 hours. The reaction is then cooled to room temperature and white precipitates are collected by suction filtration and washed with additional tetrahydrofuran. About 2.92 g of white fluffy powder is collected (75% yield) and the desired product structure is confirmed by ¹H NMR. FIG. 13 shows that 1 wt% (4-methylbenzyl)trimethylammonium chloride fully suppresses dendrite formation under the test conditions, and partially suppresses hydrogen evolution. FIG. 30 shows that 15 wt% (4-methylbenzyl)trimethylammonium chloride fully suppresses dendrite formation and hydrogen evolution under the test conditions. FIG. 31 shows that 0.1 wt% (4-methylbenzyl)trimethylammonium chloride partially suppresses dendrite formation, and less effective in suppressing hydrogen evolution than higher tested concentrations of this additive.

### (3,4-dimethylbenzyl)trimethylammonium chloride preparation and performance.

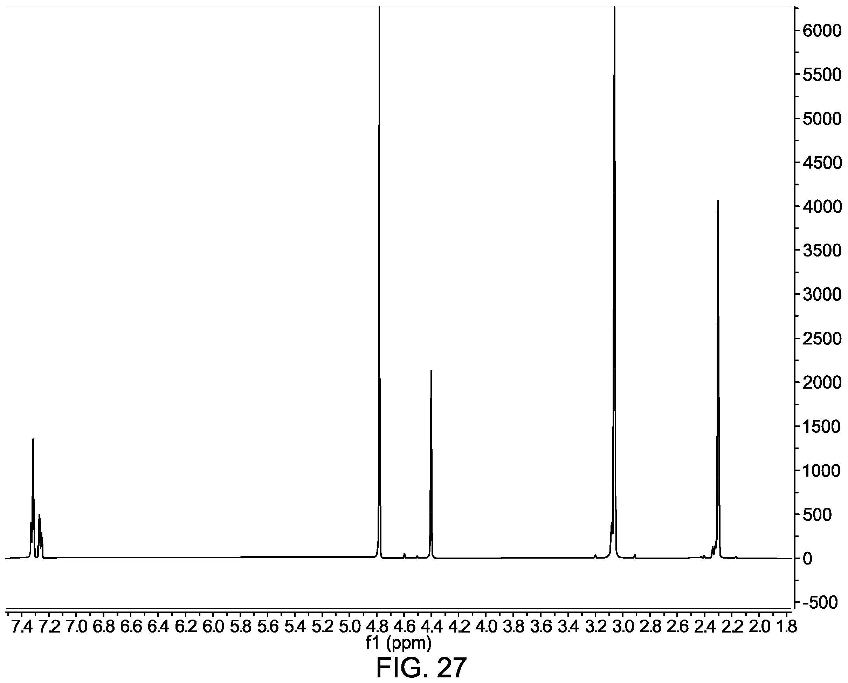

To a 100 mL flask is added 10.0 ml of a 13% solution of trimethylamine in tetrahydrofuran (1.16g, 19.6 mmol). The solution is stirred under air at room temperature. 3,4-Dimethylbenzyl chloride (2.75 g, 17.8 mmol) is added in quick portions and the reaction is heated to 60°C for 4 hrs. The reaction is then cooled to room temperature and white precipitates are collected by suction filtration and washed with additional tetrahydrofuran. About 2.75 g of white fluffy powder are collected (73% yield) and the desired product structure is confirmed by ¹H NMR as shown in FIG. 27. Also shown in FIG. 27 is an inlay photo showing that 1.0 wt% (3,4-dimethylbenzyl)trimethylammonium chloride fully suppresses dendrite formation and fully suppresses hydrogen evolution under the test conditions.

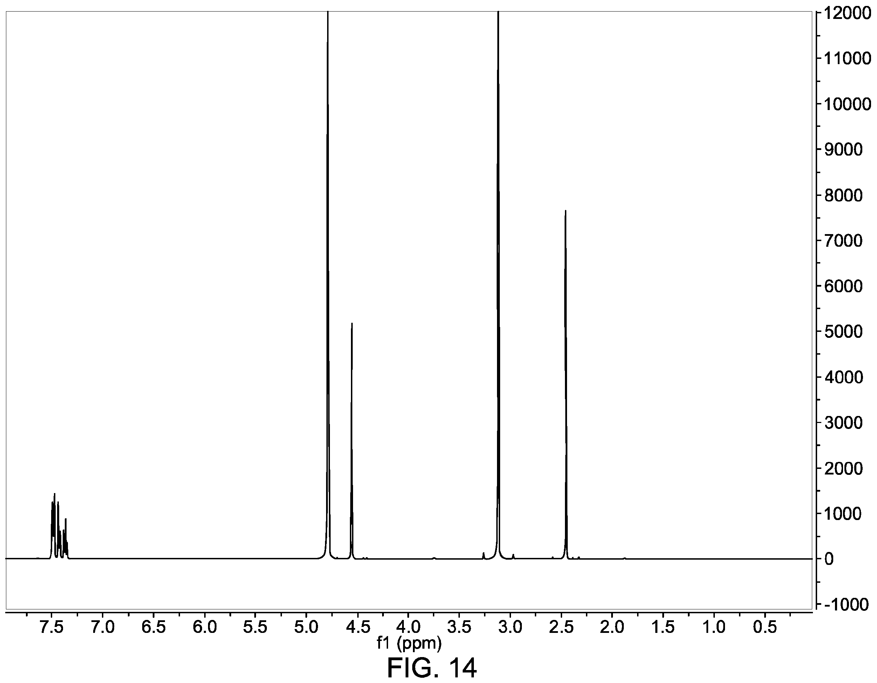

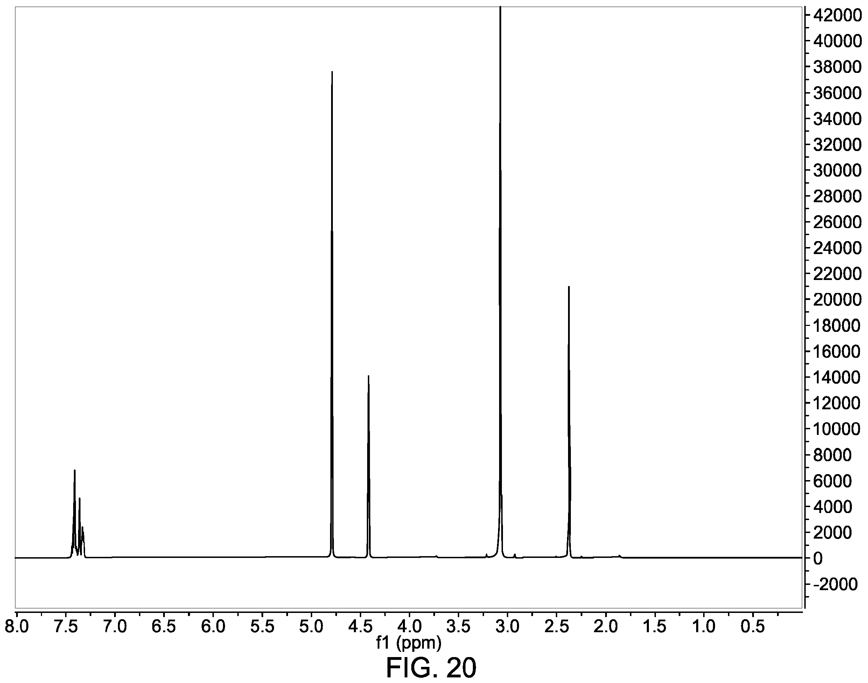

An analogous method is used to synthesize other isomers of this product, namely, (2-methylbenzyl)trimethylammonium chloride and (3-methylbenzyl)trimethylammonium chloride, as well as (2,4-dimethylbenzyltrimethylammonium chloride, (2,5-dimethylbenzyl)trimethylammonium chloride, (2,6-dimethylbenzyl)trimethylammonium chloride, (3,5-dimethylbenzyl)trimethylammonium chloride, and (2,4,6-trimethylbenzyl)trimethylammonium chloride. FIG. 14 shows that 1 wt% (2-methylbenzyl)trimethylammonium chloride fully suppresses dendrite formation, and partially suppresses hydrogen evolution. FIG. 20 shows that 1 wt% (3-methylbenzyl)trimethylammonium chloride partially suppresses dendrite formation, and partially suppresses hydrogen evolution, under the test conditions.

### Comparative preparation and performance of (4-Chlorobenzyl)trimethylammonium chloride.

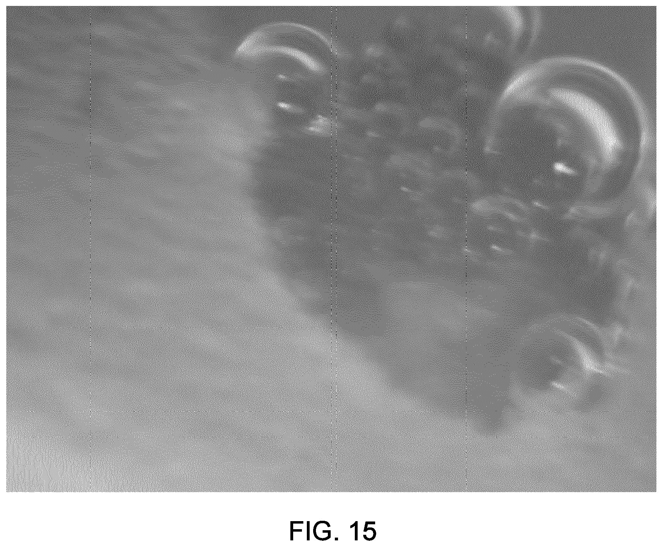

To a 100 mL flask is added 10 mL of a 13% solution of trimethylamine in tetrahydrofuran (1.16g, 19.7 mmol). The solution is stirred under air at room temperature. 4-Chlorobenzyl chloride (2.86 g, 17.8 mmol) is added in quick portions and the reaction is heated to 60°C for 3 hours. The reaction is then cooled to room temperature and the white precipitates are collected by suction filtration and washed with additional tetrahydrofuran. About 3.17 g of white fluffy powder are collected (82% yield) and the desired product structure is confirmed by ¹H NMR. FIG. 15 shows that 1 wt% (4-chlorobenzyl)trimethylammonium chloride partially suppresses dendrite formation, and hydrogen evolution, under the test conditions.

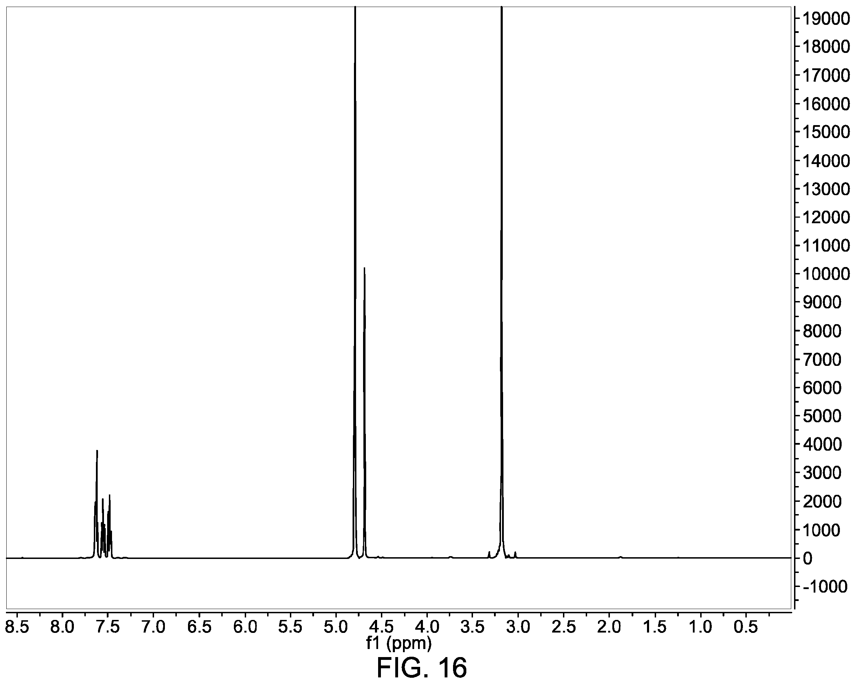

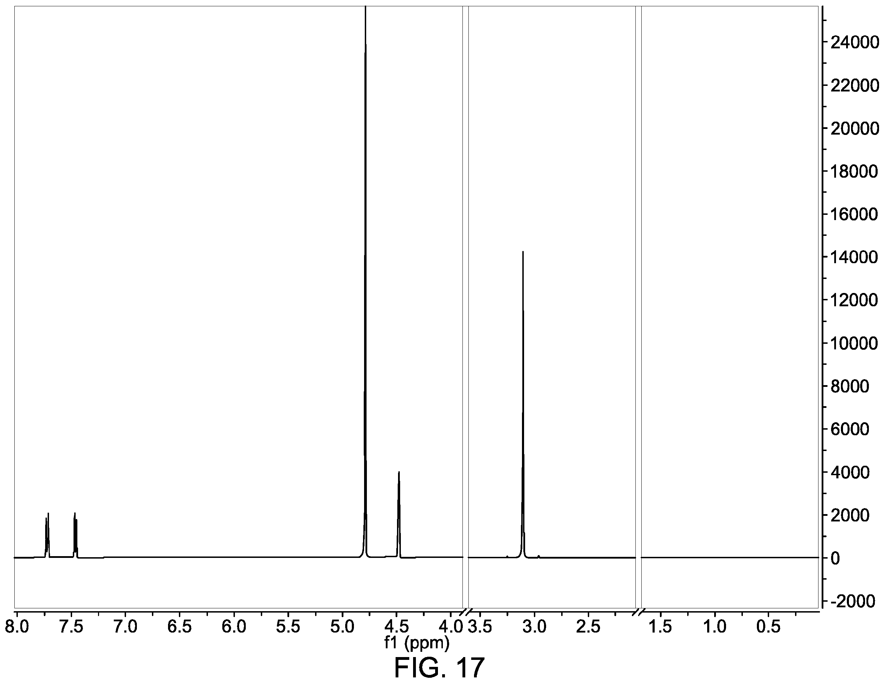

An analogous method is used to synthesize (2-chlorobenzyl)trimethylammonium chloride, (3-chlorobenzyl)trimethylammonium chloride, (2-bromobenzyl)trimethylammonium bromide, (3-bromobenzyl)trimethylammonium bromide, and (4-bromobenzyl)trimethylammonium bromide, with the later three using reagent bromobenzyl bromide in place of chlorobenzyl chloride. Similarly, iodobenzyl chlorides are used in an analogous method to produce (2-iodobenzyl)trimethylammonium chloride, (3-bromobenzyl)trimethylammonium chloride, and (4-iodobenzyl)trimethylammonium chloride. FIG. 16 shows that (2-chlorobenzyl)trimethylammonium chloride does not suppress dendrite formation under the test conditions, but does partially suppress hydrogen evolution. FIG. 17 shows that 1 wt% (4-bromobenzyl)trimethylammonium bromide fully suppresses dendrite formation under the test conditions, and partially suppress hydrogen evolution.

### Comparative preparation and performance of Benzyltrimethylphosphonium chloride.

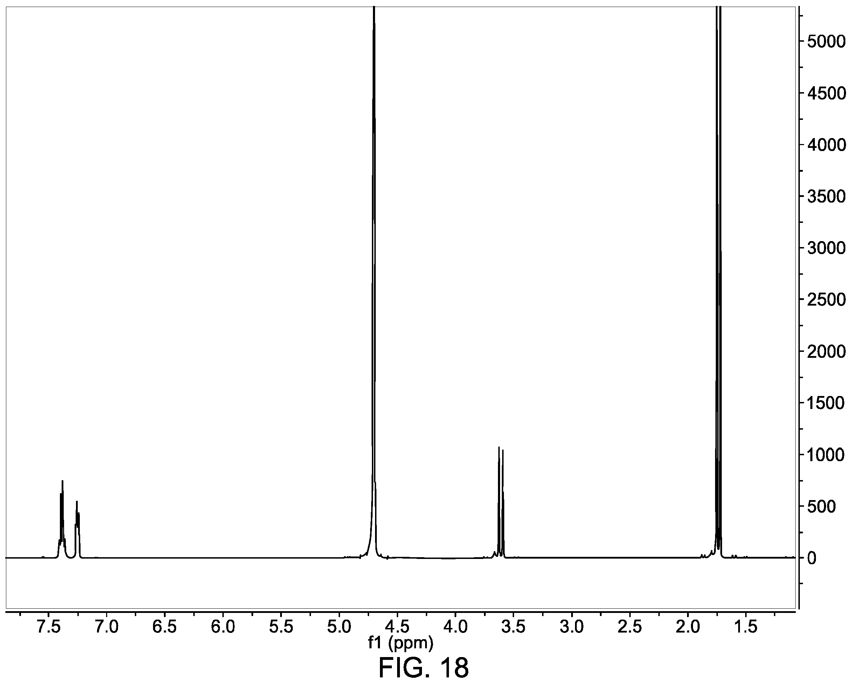

To a 100 mL flask is added 10 mL of a 1M solution of trimethylphosphine in tetrahydrofuran (1.52g, 20, ml, 20 mmol). The solution is stirred under nitrogen at room temperature. Benzylchloride (2.52 g, 2.3 ml, 20.0 mmol) is added in quick portions and the reaction is heated to 60°C for 3 hours. The reaction is then cooled to room temperature and white precipitates are collected by brief suction filtration. About 1.80 g of white fluffy powder is collected (44% yield) and the desired product structure is confirmed by ¹H NMR. FIG. 18 shows that 1 wt% benzyltrimethylphosphonium chloride partially suppresses dendrite formation, but does not suppress hydrogen evolution, under the test conditions.

### (2-Hydroxybenzyl)trimethylammonium iodide preparation and performance.

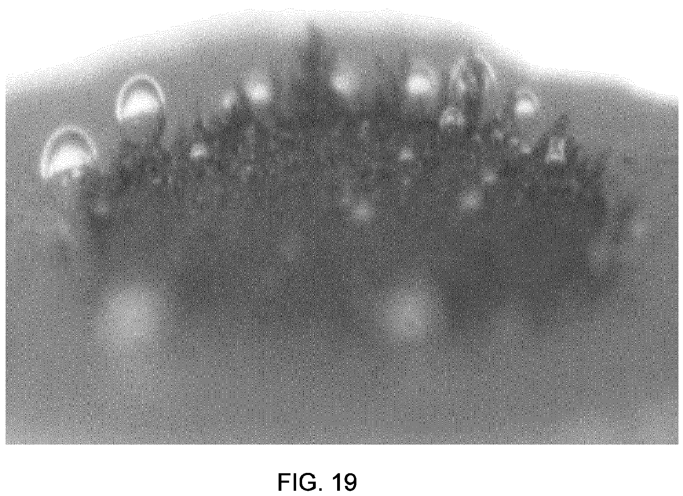

To a 100 mL flask is added 2-[(Dimethylamino)methyl]phenol (2.45 g, 16.2 mmol) and tetrahydrofuran (25 mL). The clear solution is cooled to 0°C by an ice bath under air and with magnetic stirring. To this solution iodomethane (3.45 g, 24.3 mmol) is added dropwise. After stirring for 20 minutes the ice bath is removed and the reaction proceeds at room temperature for 3 hours as a viscous oil forms at the bottom of the flask. The solvents are removed from the reaction by reduced pressure (Rotavap) to a mass of orange/brown amorphous solid measuring 4.6 g (94% yield). The desired product structure is confirmed by ¹H NMR. FIG. 19 shows that 1 wt% (2-hydroxybenzyl)trimethylammonium iodide partially suppresses dendrite formation, and partially suppresses hydrogen evolution, under the test conditions.

### 4-(Trimethylammoniummethyl)benzoic acid bromide preparation.

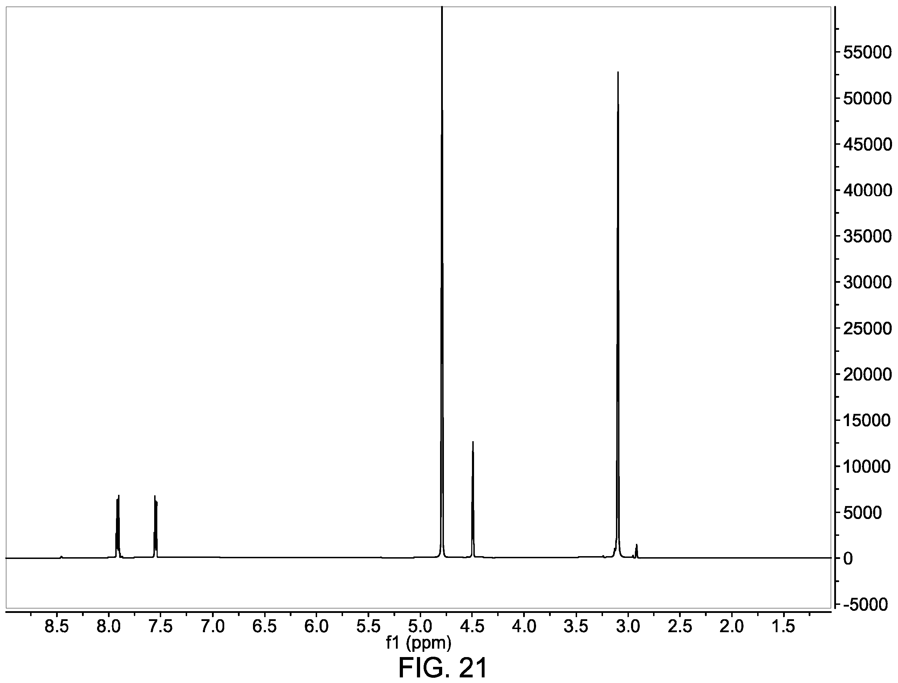

To a 100 mL flask is added 8.0 mL of a 13% solution of trimethylamine in tetrahydrofuran (0.92g, 15.6 mmol) is diluted in 30 mL acetonitrile. The solution is stirred under air at room temperature. Then, 4-(bromomethyl)benzoic Acid (3.36g, 15.6 mmol) is added in quick portions and the reaction is heated to 80°C for 3 hrs. The reaction is then cooled to room temperature and white precipitates are collected by suction filtration and washed with additional tetrahydrofuran. About 4.10 g of white solids are collected (95.6% yield) and the desired product structure is confirmed by ¹H NMR. FIG. 21 shows that 1 wt% 4-(Trimethylammoniummethyl)benzoic acid bromide partially suppresses dendrite formation, and partially suppresses hydrogen evolution, under the test conditions.

### (2,6-Dimethylbenzyl)trimethylammonium chloride preparation.

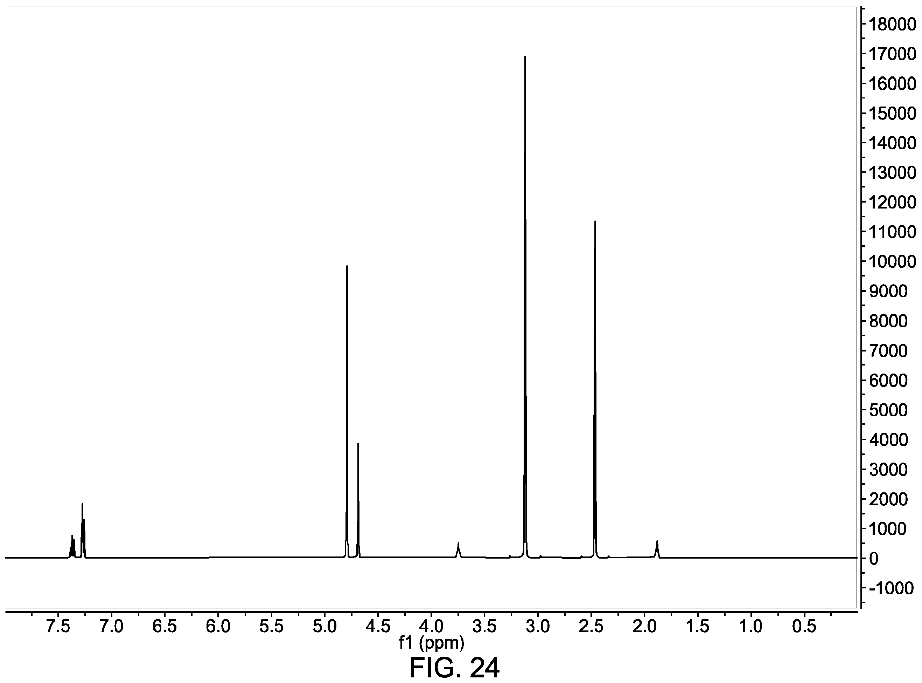

To a 100 mL flask is added 9.1 mL of a 13% solution of trimethylamine in tetrahydrofuran (1.05g, 17.8 mmol). The solution is stirred under air at room temperature. 2,6-Dimethylbenzyl chloride (2.5 g, 16.2 mmol) is added in quick portions and the reaction is heated to 60°C for 3 hrs. The reaction is then cooled to room temperature and the white precipitates are collected by suction filtration and washed with additional tetrahydrofuran. About 3.05 g of white fluffy powder are collected (88% yield) and the desired product structure is confirmed by ¹H NMR. FIG. 24 shows that 1.0 wt% (2,6-Dimethylbenzyl)trimethylammonium chloride partially suppresses dendrite formation, but does not suppress hydrogen evolution, under the test conditions.

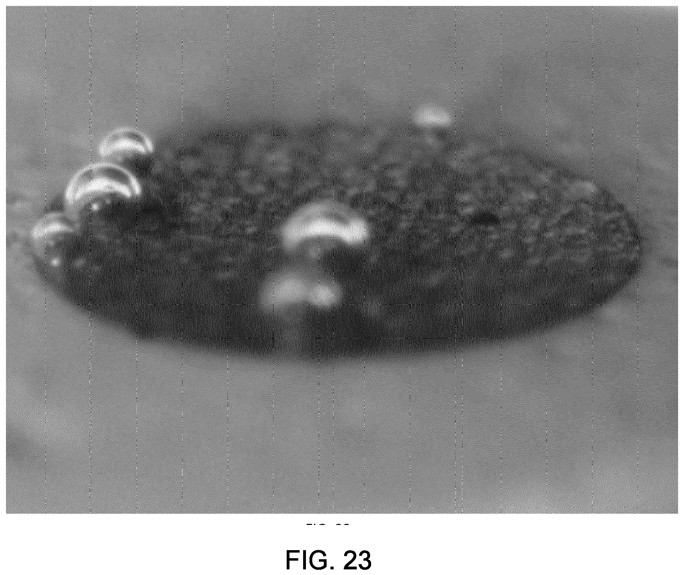

FIG. 23 shows comparative data obtained with 1.0 wt% Benzalkonium Chloride is effective in fully suppressing dendrite formation and hydrogen evolution under the test condition. The tested additive is a mixture having the following formula, where R⁵=CₙH₂ₙ₊₁ where 8≤ n ≤18:

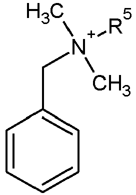

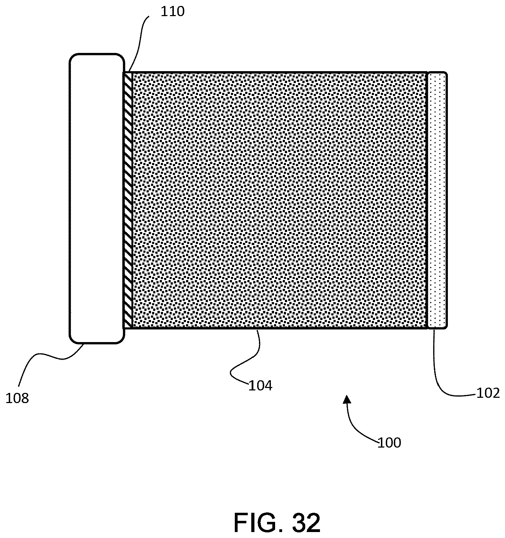

FIG. 32 shows a schematic view of a zinc-battery cell 100. The cell includes a zinc anode 102 in communication with a cathode 108 through an electrolyte 104. A porous separator 110 such as a membrane may be interposed between the cathode 108 and the electrolyte 104. In the present invention the cathode is air or carbon.

It will be apparent to those skilled in the art that the above methods and apparatuses may be modified only insofar as such modifications fall within the scope of the present invention.. The invention is intended to include all such modifications and alterations insofar as they come within the scope of the appended claims.

Having thus described the invention, it is now claimed:

## Claims

1. A zinc battery cell, comprising:
a cathode in electric communication with a zinc anode through an electrolyte; wherein the cathode is carbon or air, and
an effective amount of an electrolyte additive, comprising: 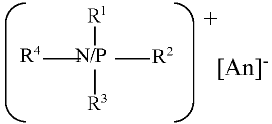
wherein, N/P is a central nitrogen or central phosphorous atom having a +1 charge;
wherein R¹ is selected from the group consisting of 4-methylene-toluene, 3-methylene-toluene, 2-methylene-toluene, 4-methylene-chlorobenzene, 3-methylene-chlorobenzene, 2-methylene-chlorobenzene, 4-methylene-bromobenzene, 3-methylene-bromobenzene, 2-methylene-bromobenzene, 4-methylene-iodobenzene, 3-methylene-iodobenzene, 2-methylene-iodobenzene, 4-methylene-cyanobenzene, 3-methylene-cyanobenzene, 2-methylene-cyanobenzene, 4-methylene-anisole, 3-methylene-anisole, 2-methylene-anisole, 1-methylnaphthalene, 1-methylene-2,6-dimethylbenzene, 1-methylene-2,4-dimethylebenzene, 1-methylene-3,4-dimethylbenzene, 1-methylene-2,5-dimethylbenzene, 1-methylene-3,5-dimethylbenzene, 1-methylene-2,4,6-trimethylbenzene,1-methylene-3,4,5-trimethoxybenzene, 1-methylene-2,6-dichlorobenzene, 4-methylene-nitrobenzene, 4-methylene-benzoic acid, 3-methylene-benzoic acid, 2-methylene-benzoic acid, 2-methylene-phenol, 3-methylene-phenol, and 4-methylene-phenol;
wherein R², R³, and R⁴ are independently selected from R¹, or a linear or non-linear alkyl group from C1 to C25
wherein [An]- is a counter anion.

2. The zinc battery cell of claim 1, wherein the electrolyte additive is present in a concentration between 0.01 wt% and 25.0 wt%.

3. The zinc battery of claim 1, wherein the counter anion is selected from chloride, bromide, iodide, fluoride, hydroxide, nitrate, nitrite, sulphate, sulphite, phosphate, perchlorate, or any combination thereof.

4. The zinc battery of claim 1, wherein R², R³, and R⁴ are independently selected from methyl, ethyl, n-propyl, n-butyl, n-pentyl, n-hexyl, n-octyl, n-decyl, n-dodecyl, n-tetradecyl, n-hexadecyl, or n-octadecyl.

## Patentansprüche

1. Eine Zinkbatterie-Zelle, umfassend:
eine Kathode in elektrischem Kontakt mit einer Zinkanode durch einen Elektrolyten; wobei die Kathode aus Kohlenstoff oder Luft besteht, und
eine wirksame Menge eines Elektrolytzusatzes, umfassend: 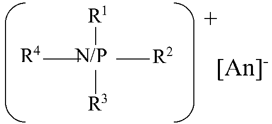
wobei N/P ein zentrales Stickstoff- oder zentrales Phosphoratom mit einer +1 Ladung ist;
wobei R¹ aus der Gruppe bestehend aus 4-Methylen-Toluol, 3-Methylen-Toluol, 2-Methylen-Toluol, 4-Methylen-Chlorbenzol, 3-Methylen-Chlorbenzol, 2-Methylen-Chlorbenzol, 4-Methylen-Brombenzol, 3-Methylen-Brombenzol, 2-Methylen-Brombenzol, 4-Methylen-Iodobenzol, 3-Methylen-Iodobenzol, 2-Methylen-Iodobenzol, 4-Methylen-Cyanobenzol, 3-Methylen-Cyanobenzol, 2-Methylen-Cyanobenzol, 4-Methylen-Anisol, 3-Methylen-Anisol, 2-Methylen-Anisol, 1-Methylnaphthalin, 1-Methylen-2,6-Dimethylbenzol, 1-Methylen-2,4-Dimethylbenzol, 1-Methylen-3,4-Dimethylbenzol, 1-Methylen-2,5-Dimethylbenzol, 1-Methylen-3,5-Dimethylbenzol, 1-Methylen-2,4,6-Trimethylbenzol, 1-Methylen-3,4,5-Trimethoxybenzol, 1-Methylen-2,6-Dichlorbenzol, 4-Methylen-Nitrobenzol, 4-Methylen-Benzoesäure, 3-Methylen-Benzoesäure, 2-Methylen-Benzoesäure, 2-Methylen-Phenol, 3-Methylen-Phenol und 4-Methylen-Phenol ausgewählt ist; wobei R², R³ und R⁴ unabhängig voneinander aus R¹ oder einer linearen oder nichtlinearen Alkylgruppe von C1 bis C25 ausgewählt sind
wobei [An]- ein Gegenanion ist.

2. Zinkbatterie-Zelle nach Anspruch 1, wobei der Elektrolytzusatz in einer Konzentration zwischen 0,01 Gew.-% und 25,0 Gew.-% vorhanden ist.

3. Zinkbatterie nach Anspruch 1, wobei das Gegenanion aus Chlorid, Bromid, Iodid, Fluorid, Hydroxid, Nitrat, Nitrit, Sulfat, Sulfit, Phosphat, Perchlorat oder einer beliebigen Kombination davon ausgewählt ist.

4. Zinkbatterie nach Anspruch 1, wobei R², R³ und R⁴ unabhängig voneinander aus Methyl, Ethyl, n-Propyl, n-Butyl, n-Pentyl, n-Hexyl, n-Octyl, n-Decyl, n-Dodecyl, n-Tetradecyl, n-Hexadecyl oder n-Octadecyl ausgewählt sind.

## Revendications

1. Pile électrique au zinc, comprenant :
une cathode en communication électrique avec une anode en zinc par le biais d'un électrolyte ; dans laquelle la cathode est du carbone ou de l'air, et
une quantité efficace d'un additif électrolytique, comprenant : 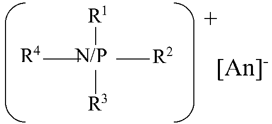
dans laquelle N/P est un atome d'azote central ou de phosphore central ayant une charge de +1 ;
dans laquelle R¹ est choisi dans le groupe consistant en 4-méthylène-toluène, 3-méthylène-toluène, 2-méthylène-toluène, 4-méthylène-chlorobenzène, 3-méthylène-chlorobenzène, 2-méthylène-chlorobenzène, 4-méthylène-bromobenzène, 3-méthylène-bromobenzène, 2-méthylène-bromobenzène, 4-méthylène-iodobenzène, 3-méthylène-iodobenzène, 2-méthylène-iodobenzène, 4-méthylène-cyanobenzène, 3-méthylène-cyanobenzène, 2-méthylène-cyanobenzène, 4-méthylène-anisole, 3-méthylène-anisole, 2-méthylène-anisole, 1-méthylnaphtalène, 1-méthylène-2,6-diméthylbenzène, 1-méthylène-2,4-diméthylbenzène, 1-méthylène-3,4-diméthylbenzène, 1-méthylène-2,5-diméthylbenzène, 1-méthylène-3,5-diméthylbenzène, 1-méthylène-2,4,6-triméthylbenzène, 1-méthylène-3,4,5-triméthoxybenzène, 1-méthylène-2,6-dichlorobenzène, 4-méthylène-nitrobenzène, acide 4-méthylène-benzoïque, acide 3-méthylène-benzoïque, acide 2-méthylène-benzoïque, 2-méthylène-phénol, 3-méthylène-phénol, et 4-méthylène-phénol ;
dans laquelle R², R³ et R⁴ sont indépendamment choisis parmi R¹, ou un groupe alkyle linéaire ou non linéaire en C1 à C25
dans laquelle [An]- est un contre-anion.

2. Pile électrique au zinc selon la revendication 1, dans laquelle l'additif électrolytique est présent à une concentration comprise entre 0,01 % en poids et 25,0 % en poids.

3. Pile au zinc selon la revendication 1, dans laquelle le contre-anion est choisi parmi le chlorure, le bromure, l'iodure, le fluorure, l'hydroxyde, le nitrate, le nitrite, le sulfate, le sulfite, le phosphate, le perchlorate, ou toute combinaison de ceux-ci.

4. Pile au zinc selon la revendication 1, dans laquelle R², R³ et R⁴ sont indépendamment choisis parmi le méthyle, l'éthyle, le n-propyle, le n-butyle, le n-pentyle, le n-hexyle, le n-octyle, le n-décyle, le n-dodécyle, le n-tétradécyle, le n-hexadécyle ou le n-octadécyle.
